# EUROPEAN PATENT APPLICATION

(11) **EP 1 800 838 A2**
(43) Date of publication of application: **27.06.2007**
(21) Application number: 06026311.8
(22) Date of filing: 19.12.2006
(51) Int. Cl.: B29C 65/16, F02M 35/10

(54) **Method of maintaining appearance criteria in laser welded article air induction assembly**

(30) Priority: 22.12.2005 US 316554
(71) Applicant: SIEMENS CANADA LIMITED, CND-Chatham, ON N7M 5M7 (CA)
(72) Inventor: Daly, Paul Desmond, 48084 Troy, MI (US); Whitenton Baylis, Bobbye Kaye, N0R 1G0 Harrow, Ontario (CA)
(74) Representative: Fischer, Michael

(57) **Abstract**

A method of assembling a plastic article includes laser welding a first laser transparent part (12) having a first surface finish and a second laser absorbent part (14) with a second surface finish that is different than the first surface finish. The first part (12) includes a surface finish (16) that is textured and grained. The second part (14) includes a substantially smooth non-textured surface finish (18). One of the first (12) and second (14) parts includes a carbon black dye that provides a desired black color. The other of the first (12) and second (14) parts does not include the black dye but instead utilizes another dark colored dye. The carbon black dye provides for the part to be laser absorbent and the other type of dye is utilized to provide a substantially similar appearance in a laser transparent part.

## Description

### BACKGROUND OF THE INVENTION

This invention generally relates to a laser welded article including at least two parts assembled to each other. More particularly, this invention relates to a laser welded article including a first part with a first surface finish and a second part with a second surface finish different than the first part

Plastic parts such as tubes and manifolds are often fabricated from several separately molded parts that are assembled to each other to form a desired completed assembly. Many methods of assembling plastic parts are known in the art including ultrasonic welding, and laser welding. Ultrasonic welding requires specially designed joints that are costly and relatively difficult to implement. Laser welding requires a much simpler joint design and is applicable to many differing applications.

Laser welding utilizes a laser that is directed through a laser transparent part to a laser absorbing part. The laser absorbent part heats due to the heat energy provided by the laser and transmits this heat to the adjacent laser transparent part. As plastic material melts in this location, plastic from each part intermingles and once cooled forms the desired joint.

Many automotive components are formed of black plastic. The black color provides several aesthetic advantages over brighter colors. A black color typically attracts less attention than brighter colors. This is especially so for engine components. The black color provides a more pleasing appearance. The black color is often provided by a carbon black additive. Carbon black dye provides stability, and does not deteriorate visually with age.

Disadvantageously, carbon black is laser absorbent meaning that any part utilizing carbon black will not allow a sufficient amount of laser heat energy to pass through, and therefore a laser translucent component cannot utilize a carbon black dye.

Accordingly, it is desirable to develop a method and process for laser welding plastic parts that achieves the desired appearance and that does not discolor in a laser transparent part.

### SUMMARY OF THE INVENTION

A method according to this invention produces a plastic article including a first laser absorbent part having a first surface finish and a second laser transparent part with a second surface finish that is different than the first surface finish.

The example plastic article includes the first part that is visible with a first surface finish that is textured and grained. The second part is not substantially visible and includes a substantially smooth non-textured surface finish. The first and second parts are attached to each other by a laser welding process. The textured surface finish provides a desired appearance for visible surfaces while still providing the desired laser properties in combination with the second part to facilitate the laser welding process.

One of the first and second parts includes a carbon black dye that provides a desired black color. The other of the first and second parts does not include the black dye but instead utilizes another dark colored dye. The carbon black dye is utilized on the laser absorbent part and another material is utilized to provide a substantially similar appearance in a laser transparent part.

Accordingly, the method according to this invention provides a process for laser welding plastic parts that achieves the desired appearance and that provides a desired visible appearance.

These and other features of the present invention can be best understood from the following specification and drawings, the following of which is a brief description.

### BRIEF DESCRIPTION OF THE DRAWINGS

Figure 1 is a schematic representation of an example plastic article fabricated using the inventive method of this invention.

Figure 2 is schematic representation of another example plastic article fabricated using the inventive method of this invention.

Figure 3 is a schematic representation of an example plastic intake manifold fabricated using the inventive method of this invention.

Figure 4 is a schematic representation of another example plastic intake manifold according to this invention.

### DETAILED DESCRIPTION OF THE PREFERRED EMBODIMENT

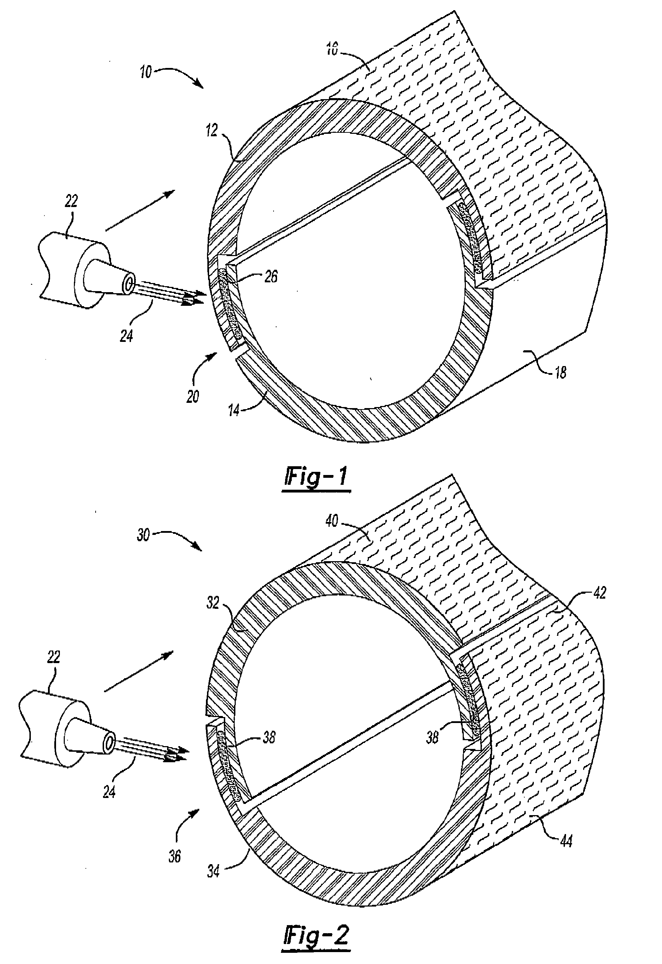

Referring to Figure 1, a plastic tube assembly 10 is schematically shown and includes a first part 12 that includes a first surface finish 16 attached to a second part 14 that includes a second surface finish 18. The first part 12 and the second part 14 are plastic and include features that form a joint 20. The joint 20 is laser welded by way of the application of a beam of laser energy 24 that is emitted from a laser energy source 22.

The laser welded joint 20 is produced by directing laser energy through the first part 12 for absorption by the second part 14. The first part 12 is a laser translucent material providing for the transmission of energy from the laser beam 24 to the second part 14. The second part 14 comprises a laser absorbent material such that energy striking the second part 14 heats the second part 14 and causes a melting of plastic. The melted plastic of the second part 14 causes a melting in the plastic of adjacent portions of the first part 12. Melted plastic material from the first and second parts intermingle and when cooled form a weld 26.

The plastic tube assembly 10 of this invention includes a first surface finish on the first part 12. The first surface finish is a grained structure provided by a texture in a mold utilized to form the molded part. A smooth molded surface provides a high reflectivity, even in black molded parts. The smooth surface can in some instances show scratches, dirt and grease that accumulate through handling and assembly in automotive components. However, a grained surface is not necessary in non-visible portions of a plastic article.

The plastic tube assembly 10 of this invention includes the first surface finish 16 having a grained structure and a second surface finish 18 having a different and smooth non-textured surface finish as compared to the first surface finish 16. The smooth surface finish is on a non-visible portion of the plastic tube assembly 10. The different surface finishes provide the desired appearance while also providing a substantially non-uniform surface finish.

A carbon black dye that provides a substantially laser absorbent plastic part is utilized in the visible or first part 12, while a non black dye that is dark in color such as red, purple or blue is utilized on the laser transparent part.

Referring to Figure 2, another plastic tube assembly 30 is shown with the first part 32 having a grained and textured surface finish that is different than the second smooth surface finish 44. The first part 32 is fabricated utilizing the carbon black dye, and therefore is laser absorbent. The second part 34 is not substantially visible and is therefore mixed with a non-laser absorbent dye having a dark color. Laser energy by way of the beam 24 is transmitted through a portion of the second part 34 onto the first part 32 to form the desired weld 38 at a joint 36. The second part 34 may include a textured portion 42 that matches the textured surface 40 of the first part 32. This provides the desired uniform appearance of the visible surfaces without the need to provide a uniform surface finish over each of the first and second parts 32, 34.

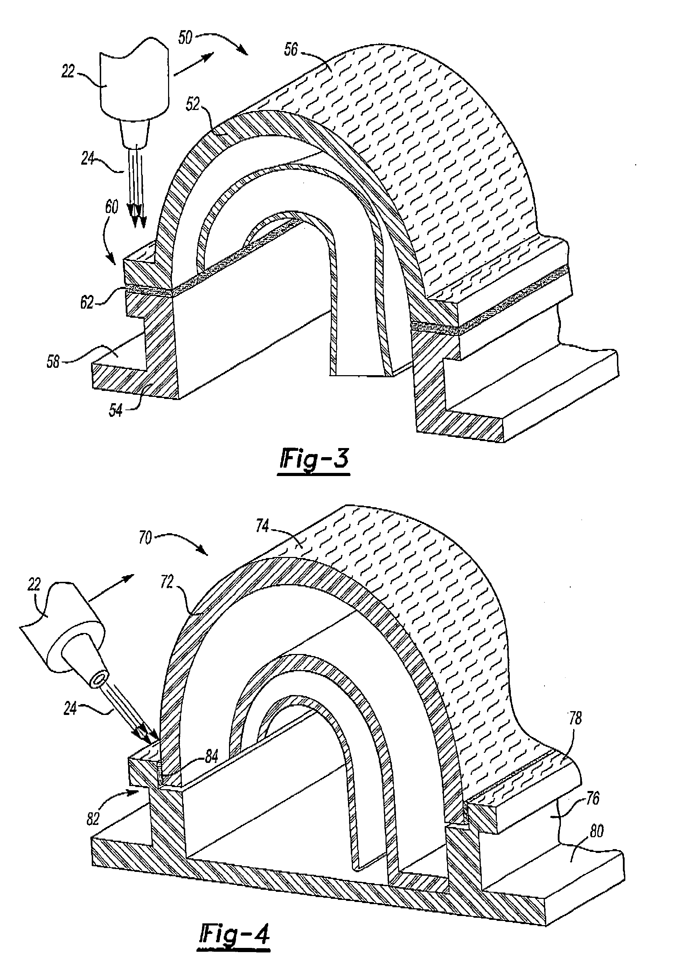

Referring to Figure 3, a plastic intake manifold 50 for an automobile is schematically shown and includes a first part 52 that is visible and a second part 54 that is not substantially visible when assembled within a vehicle. The first or upper part 52 that is visible when looking under the hood of an automobile includes a textured surface finish 52, and the second part 54 includes a substantially smooth or reflective surface finish. A joint 60 between the first and second parts 52, 54 is laser welded with a laser weld 62. The intake assembly 50 therefore includes a substantially non-uniform surface finish while still providing the desired aesthetic appearance.

The smooth surface finish 58 of the second part 54 includes a substantially high reflectivity, where the textured surface finish 56 of the second part has relatively low reflectivity. The low reflectivity is provided by the grained surface texture 56 that disperses potentially reflective rays in random directions, rather than uniformly as is provided by the smooth surface finish 58.

The second part 54 includes a laser absorbent material such that substantially all of the laser energy of the laser beam 24 passes through the first part 52 and is absorbed by the second part to form the weld 62. The second part 54 is colored utilizing the laser absorbent carbon black or other known laser absorbent materials and additives.

Referring to Figure 4, another intake manifold according to this invention includes a first part 72 having a textured surface finish 74 that is different than a second surface finish 80 of a second part 76. The second surface finish 80 is smooth and reflective as compared to the textured surface finish of the first part 52. A joint 60 is arranged such that the laser beam 24 passes through the second part 76 and is absorbed by the first part 72 to form the desired weld bead 84.

The second part 76 is provided with a textured surface portion 78 such that the visible parts of the manifold assembly 70 are substantially of a uniform textured appearance. However, the entire intake manifold is not of a uniform appearance or reflectivity.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of fabricating a plastic component comprising the steps of:
a) forming a first part with a grained surface finish;
b) forming a second part for assembly to the first part with a surface finish that is smooth relative to the grained surface finish of the first part;
c) forming a joint between the first part and the second part; and
d) directing laser energy at the joint for forming a laser weld between the first part and the second part.

2. The method as recited in claim 1, wherein the first part composes a substantially laser transparent material and the second part comprises a substantially laser absorbent material.

3. The method as recited in claim 2, wherein the formed joint comprises a portion of the first part that overlaps a portion of the second part such that said step of directing laser energy at the joint includes directing laser energy through the first part to the second part.

4. The method as recited in claim 2, including forming the second part utilizing carbon black dye.

5. The method as recited in claim 1, wherein the first part comprises a substantially laser absorbent material and the second part comprises a substantially laser transparent material.

6. The method as recited in claim 5, including forming the first part utilizing a carbon black dye.

7. The method as recited in claim 6, wherein the second part includes a portion of surface finish within the joint comprising the grained surface finish.

8. The method as recited in claim 7, wherein the portion of the second part comprising the grained surface finish overlaps a portion of the first part within the joint.

9. The method as recited in claim 1, wherein the first part comprises an upper manifold portion and the second part comprises a lower manifold portion.

10. The method as recited in claim 1, wherein the first part comprises an upper tube portion and the second part comprises a lower tube portion.

11. A method of fabricating a plastic air intake component comprising the steps of:
a) forming a first part including an outer surface having a first reflectivity;
b) forming a second part including an outer surface having a second reflectivity greater than the first part;
c) forming a joint between the first part and the second part; and
d) directing laser energy at the joint for forming a laser weld between the first part and the second part.

12. The method as recited in claim 11, wherein the first part comprises a laser transparent material and the second part comprises a laser absorbent material.

13. The method as recited in claim 11, wherein the second part comprises a laser transparent material and the first part comprises a laser absorbent material.

14. The method as recited in claim 11, including the step of forming the outer surface of the first part with a grained surface finish.
